# FASCICULE DE BREVET EUROPEEN

(11) **EP 3 997 759 B1**
(45) Date de publication et mention de la délivrance du brevet: **07.06.2023**
(21) Numéro de dépôt: 20734403.7
(22) Date de dépôt: 26.06.2020
(51) Int. Cl.: H01R 4/2407, H01R 4/64

(54) **DISPOSITIF DE CONNEXION POUR METTRE À LA TERRE UN ÉQUIPEMENT ÉLECTRIQUE ET/OU CRÉER UNE LIAISON ÉQUIPOTENTIELLE ENTRE DES ÉLÉMENTS CONDUCTEURS**
VERBINDUNGSVORRICHTUNG ZUM ERDEN EINES ELEKTRISCHEN GERÄTES UND/ODER ZUR ERZEUGUNG EINER ÄQUIPOTENZIALVERBINDUNG ZWISCHEN LEITENDEN ELEMENTEN
CONNECTION DEVICE FOR GROUNDING AN ELECTRICAL APPARATUS AND/OR CREATING AN EQUIPOTENTIAL LINK BETWEEN CONDUCTIVE ELEMENTS

(30) Priorité: 11.07.2019 FR 1907825
(43) Date de publication de la demande: 18.05.2022
(73) Titulaire: Mobasolar, 68600 Wolfgantzen (FR)
(72) Inventeur: KELLER, Marc, 68127 OBERHERGHEIM (FR)
(74) Mandataire: Cabinet Laurent & Charras
(86) Numéro de dépôt international: PCT/EP2020/068068
(87) Numéro de publication internationale: WO 2021/004815

(56) Documents cités:
- US-A1- 2018 090 856
- US-B2- 8 590 223
- US-B2- 9 742 350

## Description

### Domaine technique

La présente invention concerne un dispositif de connexion pour mettre à la terre un équipement électrique et/ou créer une liaison équipotentielle entre des éléments conducteurs, agencé pour être intercalé entre une première pièce et une seconde pièce, ladite première pièce appartenant audit équipement électrique et étant électriquement conductrice, et ladite seconde pièce appartenant à une structure de support sur laquelle est monté ledit équipement électrique pouvant être au moins en partie électriquement isolante, ledit dispositif de connexion comportant une première zone d'auto-connexion agencée pour créer automatiquement un contact électrique entre ledit dispositif de connexion et ladite première pièce lorsque ledit équipement électrique est monté sur ladite structure de support.

### Technique antérieure

Dans toute installation électrique, les pièces électriquement conductrices, telles que cadre, châssis, support, etc., généralement métalliques, doivent être reliées par une liaison équipotentielle, laquelle est reliée à la terre pour répondre aux normes de sécurité électrique, garantir l'absence de potentiel électrique dans l'installation, et permettre ainsi l'écoulement vers la terre des courants de fuite en cas d'anomalies, de foudre, etc. Ces normes de sécurité électrique sont en vigueur dans la majorité des pays. Dans le domaine plus spécifique des installations de panneaux photovoltaïques, panneaux thermiques, panneaux hybrides thermiques/photovoltaïques, ou similaires, le cadre métallique de chacun des panneaux doit être individuellement relié à la terre. De manière traditionnelle, cette mise à la terre est effectuée par câblage au moyen d'un conducteur électrique, fixé au cadre métallique de chaque panneau par l'intermédiaire de cosses et de vis à travers des trous ou des taraudages réalisés directement dans ledit cadre. Cette opération de câblage ne peut être effectuée que par un électricien habilité, demande un temps d'intervention sur site relativement long, et peut s'avérer complexe voire dangereuse en fonction de l'emplacement de l'installation, notamment lorsqu'elle est située en hauteur sur des toitures de bâtiments. En outre, si la structure de support desdits panneaux est discontinue et formée d'organes de support métalliques individuels, chacun des organes de support doit également être relié à la terre par un conducteur électrique spécifique, d'où une opération de câblage encore plus chronophage.

Les publications US 2018/090856 A1 et US 9,742,350 B2 décrivent des systèmes de fixation pourvus d'un boulon à visser permettant de fixer un câble de mise à la terre sur un rail, lequel rail supporte un panneau photovoltaïque. Ces systèmes imposent que le rail ainsi que la liaison entre le rail et le cadre du panneau photovoltaïque assurent une bonne conduction électrique.

La publication US 8,590,223 B2 décrit un clip de fixation disposé entre deux cadres de panneaux photovoltaïques adjacents, et comprenant deux zones de montage en forme de C reliées entre-elles par un pont. Chaque zone de montage s'emboite sur une aile d'un des cadres, et comporte des dents pour créer un contact électrique afin de relier électriquement les cadres entre eux. Le clip comprend en outre une zone de montage médiane en forme de U qui s'emboite dans un rail au droit de la j onction entre les cadres. Le clip permet de relier à la terre les cadres soit via les rails, eux même reliés à la terre par un câble, ce qui implique que les rails soient électriquement conducteurs, soit via un câble raccordé à chacun des clips par un oeillet vissé dans un trou prévu dans chaque clip.

La publication WO 2012/123797 A2 de la demanderesse propose une solution alternative, qui supprime les inconvénients de la méthode traditionnelle de câblage, grâce à une pièce de connexion individuelle, électriquement conductrice, réalisée en acier ressort, et munie d'extrémités auto-connectantes sous la forme de dentures pointues. Cette pièce connue sous la dénomination « griffe de mise à la terre » ou sous la marque « TERRAGRIF^{®} » a l'avantage de s'intercaler entre le cadre métallique du panneau et la structure de support métallique lors du montage dudit panneau, de créer automatiquement un contact électrique et d'assurer ainsi l'équipotentialité entre ladite structure et ledit panneau. Elle remplace avantageusement le câblage des multiples conducteurs électriques vissés dans les cadres des panneaux et la structure soit directement, soit au moyen de systèmes de fixation dédiés tels que ceux décrits dans les publications mentionnées ci-dessus. Un seul câble de mise à la terre perdure, celui raccordant in fine la structure de support métallique à la terre.

Cette solution alternative sous-entend que la structure de support est électriquement conductrice et continue comme par exemple des rails qui forment une structure quadrillée. Or certains fabricants proposent des structures de support métalliques, mais réalisées dans des matériaux à faible conductivité électrique et/ou fixées sur une surface de réception isolante (PVC, Bitume, etc.), ou des structures de support non métalliques et par conséquent électriquement isolantes (synthétiques, composites, etc.). En outre, les structures de support peuvent être ponctuelles ou discontinues et formées d'organes de support individuels. Si ces organes de support sont métalliques et électriquement conducteurs, alors ils doivent également être reliés à la terre. Dans ces différents cas et en sus des griffes de mise à la terre, chaque ensemble électriquement conducteur, et le cas échéant chaque organe de support, doit être relié à la terre par un conducteur électrique, fermement vissé avec un boulon ou une vis auto-taraudeuse et le cas échéant (selon la nature des matériaux mis en oeuvre) une rondelle bimétal pour limiter les effets de piles.

### Présentation de l'invention

La présente invention vise à solutionner ce problème en proposant un nouveau dispositif de connexion électrique permettant d'améliorer, de faciliter et d'optimiser la mise à la terre et/ou la liaison équipotentielle de tout type d'installation électrique, quelle que soit la nature de la structure de support, qu'elle soit ou non électriquement conductrice, qu'elle soit continue ou discontinue, ce nouveau dispositif étant particulièrement simple et rapide à mettre en place ne nécessitant ni vis, ni outillage, ni organe de fixation additionnel, ce dispositif étant particulièrement fiable, sécurisé, sans difficulté, accessible à un personnel non qualifié, ergonomique, polyvalent et garanti dans le temps quelles que soient les conditions climatiques ou environnementales.

Dans ce but, l'invention concerne un dispositif de connexion du genre indiqué en préambule, caractérisé en ce qu'il comporte en outre une seconde zone d'auto-connexion agencée pour créer automatiquement un contact électrique entre ledit dispositif de connexion et un conducteur électrique lorsque ledit équipement électrique est monté sur ladite structure de support, de sorte qu'une liaison équipotentielle est créée automatiquement entre au moins ledit équipement électrique et ledit conducteur électrique lors de son montage sur ladite structure de support via ledit dispositif de connexion et ledit conducteur électrique relié à la terre ou à un potentiel de référence, et en ce que ladite seconde zone d'auto-connexion comporte un logement traversant agencé pour recevoir un tronçon dudit conducteur électrique, et un organe de poinçonnage disposé au droit dudit logement et agencé pour s'incruster au moins en partie dans ledit conducteur électrique et simultanément pour le maintenir en position dans ledit logement, ceci sans outillage, ni vis, ni autre organe de fixation additionnel. Dans une forme préférée de l'invention, ledit dispositif comporte une lame électriquement conductrice, et ladite première zone d'auto-connexion et ladite seconde zone d'auto-connexion sont avantageusement formées dans ladite lame par découpage et pliage. Ladite lame est préférentiellement réalisée en acier ressort.

Ledit dispositif comporte avantageusement une zone de montage agencée pour assembler par emboîtement ledit dispositif de connexion à l'une desdites première et seconde pièces, ladite zone de montage comportant un plan d'assemblage agencé pour s'intercaler entre lesdites première et seconde pièces. Ladite zone de montage peut présenter une section en forme de U réalisée par pliage de ladite lame, et comporter une partie médiane formant ledit plan d'assemblage.

Dans la forme préférée de l'invention, ladite première zone d'auto-connexion comporte une denture pointue et saillante dudit plan d'assemblage, agencée pour s'incruster dans la matière de ladite première pièce lorsque ledit équipement électrique est monté sur ladite structure de support. La denture de ladite première zone d'auto-connexion peut être formée par découpage et pliage dans une partie pliée de ladite lame.

Ledit organe de poinçonnage est avantageusement saillant dudit plan d'assemblage et mobile entre une position passive dans laquelle il ouvre ledit logement pour pouvoir introduire ledit conducteur électrique lorsque ledit équipement électrique n'est pas monté sur ladite structure de support, et une position active dans laquelle il ferme ledit logement et s'incruste dans ledit conducteur électrique lorsque ledit équipement électrique est monté sur ladite structure de support.

Ce logement peut être formé par découpage et pliage ou cintrage dans une partie pliée de ladite lame, et l'organe de poinçonnage peut être formé par une languette en L découpée dans une partie droite ladite lame, liée à l'une de ses extrémités à ladite lame par un pli formant articulation et pourvue à l'autre extrémité d'au moins une dent pointue et/ou crantée formant poinçon.

De manière préférentielle, ledit dispositif comporte en outre des moyens de retenue agencés pour s'incruster dans la matière de la pièce à laquelle il est assemblé desdites première et seconde pièces et empêcher son retrait, et simultanément créer un contact électrique avec ladite pièce à laquelle il est assemblé si elle est électriquement conductrice.

Lesdits moyens de retenue peuvent être formés par des dents pointues, obtenues par découpage et pliage dans des parties pliées de ladite lame, disposées en opposition et saillantes à l'intérieur de ladite zone de montage.

Ces moyens de retenue peuvent en outre former une zone d'auto-connexion qui complète ou remplace ladite première zone d'auto-connexion si la pièce à laquelle il est assemblé correspond à ladite première pièce.

Selon les variantes de réalisation, le dispositif peut comporter une troisième zone d'auto-connexion obtenue par découpage et pliage dans une partie droite ladite lame, qui complète ou remplace ladite première zone d'auto-connexion, et comportant au moins une dent pointue et saillante dudit plan d'assemblage. Ladite troisième zone d'auto-connexion peut être superposée audit organe de poinçonnage.

Selon les variantes de réalisation de l'invention, ledit dispositif peut comporter deux paires d'une première zone d'auto-connexion et d'une seconde zone d'auto-connexion, les deux paires étant distantes l'une de l'autre, disposées en parallèle et agencées pour raccorder automatiquement à la terre ou à un potentiel de référence deux équipements électriques disposés côte à côte et montés sur une structure de support.

Grâce à sa conception originale, le dispositif de connexion selon l'invention est polyvalent et convient à toutes les configurations possibles, puisqu'il permet de relier à la terre aussi bien :
- des équipements électriques montés sur une structure de support électriquement isolante,
- des équipements électriques montés sur une structure de support électriquement conductrice, elle-même fixée sur une surface de réception électriquement isolante, et
- des équipements électriques montés sur une structure de support électriquement conductrice, elle-même fixée sur une surface de réception électriquement conductrice.

### Brève description des figures

La présente invention et ses avantages apparaîtront mieux dans la description suivante de plusieurs modes de réalisation donnés à titre d'exemples non limitatifs, en référence aux dessins annexés, dans lesquels:
- la figure 1 est une vue en perspective d'une partie d'une installation électrique montrant un exemple d'implantation du dispositif de connexion selon l'invention,
- la figure 2 est une vue de détail agrandie de l'installation de la figure 1 en coupe partielle au droit du dispositif de connexion,
- la figure 3 est une vue en perspective d'un dispositif de connexion selon une première forme de réalisation de l'invention, prise d'un côté,
- la figure 4 est une vue en perspective du dispositif de connexion de la figure 3, prise du côté opposé,
- la figure 5 est une vue de profil montrant schématiquement le dispositif de connexion de la figure 3 intercalé entre un support et un cadre, en position non connectée,
- la figure 6 est une vue similaire à la figure 5 du dispositif de connexion en position connectée,
- la figure 7 est une vue similaire à la figure 3 d'un dispositif de connexion selon une deuxième forme de réalisation de l'invention, et
- la figure 8 est une vue similaire à la figure 3 d'un dispositif de connexion selon une troisième forme de réalisation de l'invention.

### Description détaillée de l'invention

Dans les exemples de réalisation illustrés, les éléments ou parties identiques portent les mêmes numéros de référence.

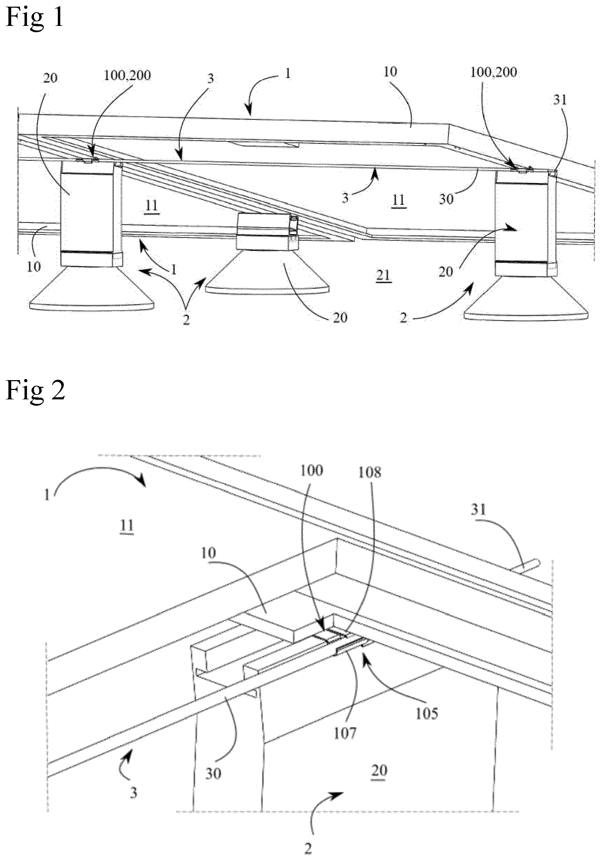

En référence aux figures et plus particulièrement à la figure 1, le dispositif de connexion 100, 200, 300 selon l'invention est réalisé dans un matériau électriquement conducteur et est agencé pour faciliter la création d'une liaison équipotentielle et le cas échéant la mise à la terre d'équipements électriques 1 montés sur une structure de support 2 en s'intercalant entre une première pièce 10 appartenant aux équipements électriques 1 et une seconde pièce 20 appartenant à la structure de support 2. On entend par « équipement électrique », tout élément qui peut être électriquement conducteur, et par « structure de support », toute surface de réception. La première pièce 10 est généralement réalisée dans des matériaux électriquement conducteurs, essentiellement métalliques, tandis que la seconde pièce 20 peut être réalisée en tout ou partie dans des matériaux électriquement conducteurs, électriquement isolants et/ou à faible conductivité électrique. Dans le contexte de l'invention, le dispositif de connexion 100, 200, 300 est associé à un conducteur électrique 3, qui court le long desdits équipements électriques 1 de manière continue ou discontinue. Ce conducteur électrique 3 comporte traditionnellement un toron de fils de cuivre 31 qui peut être protégé ou non par une gaine isolante 30. Ce conducteur électrique 3 peut être relié à la terre pour créer une liaison équipotentielle égale à zéro, ou à un potentiel de référence en fonction des installations concernées.

La figure 1 illustre un exemple d'application de l'invention à une installation de panneaux photovoltaïques 11 pourvus chacun d'un cadre métallique, constituant ladite première pièce 10 électriquement conductrice à relier à la terre. Les panneaux photovoltaïques 11 sont disposés côte à côte pour couvrir une surface, et sont montés, dans l'exemple représenté, sur des plots de montage, constituant ladite seconde pièce 20, les plots de montage étant fixés sur une surface de réception 21. Chaque panneau photovoltaïque 11 peut être supporté par plusieurs plots de montage et les plots de montage peuvent être ou non communs à deux panneaux photovoltaïques 11 adjacents. En outre, les plots de montage peuvent être de hauteur égale ou non selon que les panneaux photovoltaïques 11 sont fixés parallèlement à la surface de réception 21 ou avec une inclinaison, comme représenté sur la figure 1. Bien entendu, tout autre type de structure de support 2 avec un mode de montage différent peut convenir, dont l'emplacement, la forme et la conception sont adaptés à l'application et à la destination de ladite installation. La structure de support 2 peut être disposée au sol ou en hauteur, conçue pour définir une surface de réception de forme générale plane, courbe ou complexe, disposée dans un plan général horizontal, vertical ou incliné, et définie par des organes de support ponctuels ou discontinus comme des plots, des tronçons de rail, ou par des organes de support continus comme des rails, ou encore par une combinaison des deux, ainsi que par tout autre moyen de support équivalent, réalisés dans tout type de matériaux sans exception, puisque le critère de conductivité électrique n'est pas déterminant dans la présente invention, tels que l'aluminium et ses alliages, les matières synthétiques et composites, les matières naturelles à base de bois, etc. Encore une fois, l'invention n'est pas limitée aux installations de panneaux photovoltaïques mais s'étend à toute application mettant en oeuvre des composants électriques nécessitant une mise à la terre, tels que des panneaux thermiques, des panneaux hybrides thermiques/photovoltaïques ou similaires, des onduleurs ou micro-onduleurs, des structures métalliques de toutes sortes, des chemins de câbles, des cages de Faraday, des bâtis de machine, des cabines techniques de travail (ex. cabines de peinture), etc. ces exemples n'étant pas limitatifs.

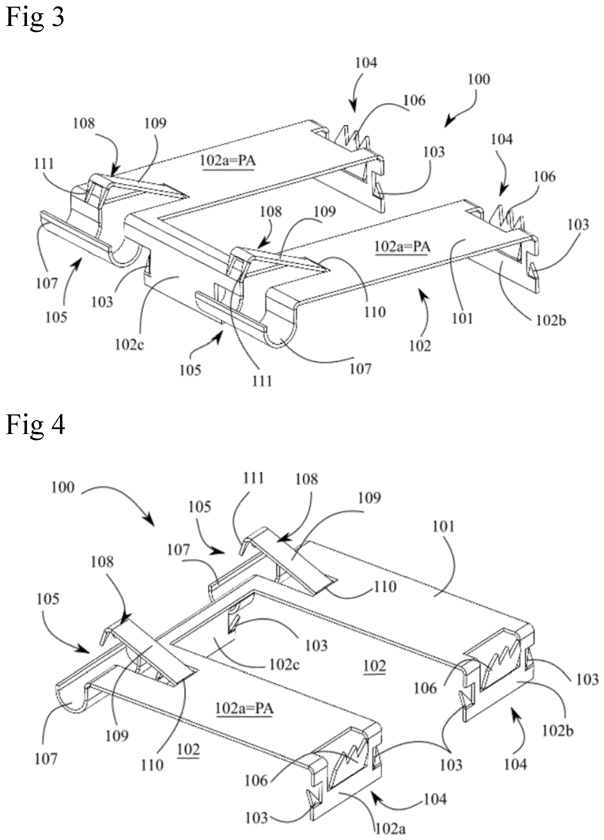

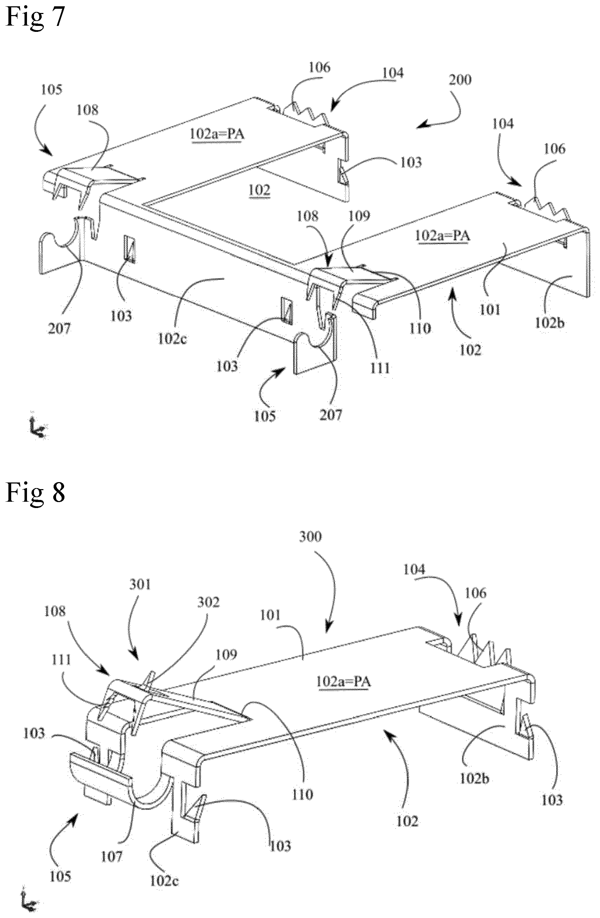

Le dispositif de connexion 100, 200, 300 est représenté en détail dans les figures 3 et 4 selon une première forme de réalisation, dans la figure 7 selon une seconde forme de réalisation ainsi que dans la figure 8 selon une troisième forme de réalisation. Il comporte ou est constitué d'une lame 101 taillée dans une bande de matière métallique et élastique, préférentiellement dans une bande en acier ressort inoxydable. Cette bande de matière peut avoir une épaisseur relativement faible et par exemple comprise entre 0,5mm et 1mm, sans que ces valeurs ne soient limitatives. Bien entendu, toute autre matière techniquement équivalente, ayant de bonnes propriétés de conductivité électrique et d'élasticité peut convenir. Cette matière peut en outre comporter ou non un traitement de surface thermique et/ou chimique pour ajouter des propriétés par exemple de protection en fonction de la nature des pièces 10, 20 en présence et/ou du milieu ambiant.

Dans les exemples illustrés, le dispositif de connexion 100, 200, 300 présente une section générale en forme de U, formée par pliage de ladite lame 101, pour créer une zone de montage 102, soit à l'intérieur du U, soit à l'extérieur du U, pour assembler le dispositif de connexion 100, 200, 300 à l'une des première et seconde pièces 10, 20, sans outillage, et de préférence par emboîtement serré. La zone de montage 102 est définie par une partie médiane plane 102a de la lame 101 formant un plan d'assemblage PA entre les deux pièces 10, 20, et deux parties d'extrémité 102b, 102c de la lame 101formant deux plans de maintien sur l'une des pièces 10, 20. Les deux parties d'extrémité 102b, 102c peuvent être parallèles entre-elles ou non. Dans l'exemple illustré, le dispositif de connexion 100, 200, 300 est emboité sur l'extrémité libre de la seconde pièce 20. L'extrémité libre de cette seconde pièce 20 est plane et peut recevoir une surface plane correspondante de la première pièce 10 appartenant audit équipement électrique 1. Ainsi la partie médiane plane 102a de la lame 101 formant ledit plan d'assemblage PA est intercalée et prise en sandwich entre les deux pièces 10 et 20, et les parties d'extrémité 102b, 102c de la lame 101 se situent de part et d'autre des parois latérales de la seconde pièce 20. Bien entendu, la forme et la section du dispositif de connexion 100, 200, 300 qui définissent sa zone de montage 102 et son plan d'assemblage PA peuvent varier pour s'adapter à la forme et à la section de la pièce 10, 20 à laquelle il doit s'emboiter. La forme de la zone de montage 102 n'est donc pas limitée à une forme de U. En outre, le dispositif de connexion 100, 200, 300 peut être emboité sur ou dans l'extrémité libre de l'une des première et seconde pièces 10, 20, à l'endroit comme représenté sur les figures ou à l'envers s'il est assemblé à la première pièce 10.

Le dispositif de connexion 100, 200, 300 est en outre doté de moyens de retenue 103 agencés pour s'incruster dans la matière de la pièce 10, 20 sur laquelle il est assemblé, et empêcher son retrait accidentel. Ces moyens de retenue 103 sont formés, dans l'exemple représenté, par des dents, préférentiellement pointues, obtenues par découpage et pliage dans les parties d'extrémité 102b, 102c de la lame 101, disposées en opposition, et orientées pour être saillantes à l'intérieur de la zone de montage 102. Ainsi ces moyens de retenue 103 ont pour fonction de s'opposer au retrait dudit dispositif de connexion 100, 200, 300 à la manière d'un harpon. Bien entendu, toute autre forme de moyens de retenue techniquement équivalente peut convenir. Ces moyens de retenue 103 ont également pour fonction de créer un contact électrique avec la pièce 10, 20 à laquelle le dispositif de connexion 100, 200, 300 est assemblé, si cette pièce est électriquement conductrice. Ils forment alors une zone d'auto-connexion à part entière. Si le dispositif de connexion 100, 200, 300 est monté sur la seconde pièce 20, qui fait partie d'une structure de support 2 discontinue et qui est électriquement conductrice, alors les moyens de retenue 103 forment simultanément une zone d'auto-connexion qui permet de relier chaque seconde pièce 20 à la terre. Si le dispositif de connexion 100, 200, 300 est monté sur la première pièce 10, alors les moyens de retenue 103 forment simultanément une zone d'auto-connexion qui permet de relier chaque première pièce 10 à la terre.

Le dispositif de connexion 100, 200, 300 est remarquable en ce qu'il comporte au moins deux zones d'auto-connexion 103, 104, 105, 301, à savoir :
- une première zone d'auto-connexion 103, 104, 301 agencée pour créer automatiquement un contact électrique avec la première pièce 10 appartenant à l'équipement électrique 1 lorsqu'il est monté sur la structure de support 2, et
- une seconde zone d'auto-connexion 105 agencée pour créer automatiquement un contact électrique avec le conducteur électrique 3 lorsque l'équipement électrique 1 est monté sur la structure de support 2.

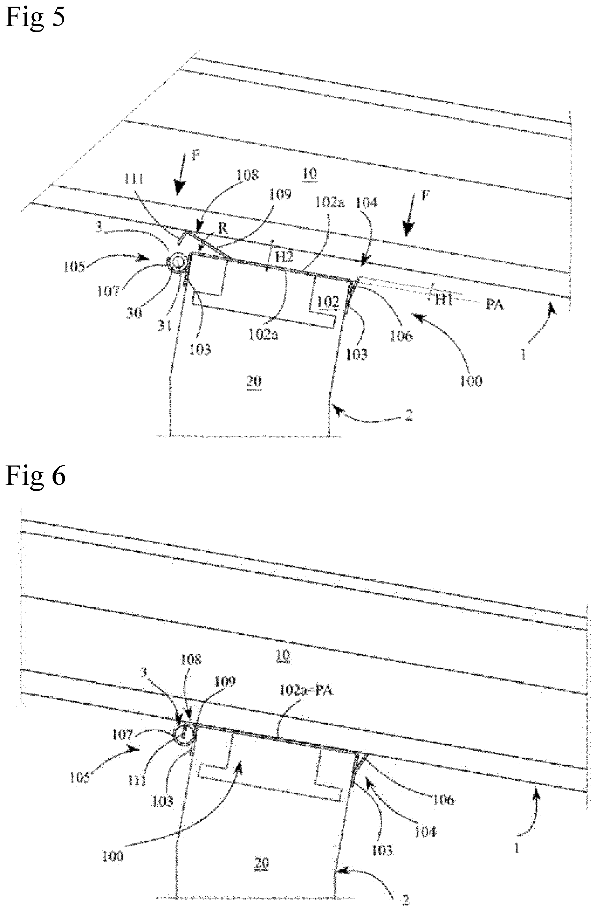

Ainsi et comme expliqué en référence aux figures 5 et 6, l'équipement électrique 1 est raccordé automatiquement à la terre ou à un potentiel de référence lors de son montage sur la structure de support 2 via le dispositif de connexion 100, 200, 300 et le conducteur électrique 3, sans outillage, ni vis, ni autre organe de fixation. L'opération de mise à la terre des équipements électriques 1 quel que soit leur nombre est rapide, facile, fiable et garantie sans risque de déréglage, ni de découplage, à l'inverse de la solution classique par câblage, où les vis de fixation peuvent se desserrer par suite de variations de température, de vibrations et/ou d'autres phénomènes, et engendrer des ruptures de liaison équipotentielle. Bien entendu, le nombre et la disposition des zones d'auto-connexion 103, 104, 105, 301 peuvent varier en fonction de divers critères et notamment de la configuration des première et seconde pièces 10, 20 entre lesquelles le dispositif de connexion 100, 200, 300 doit s'intercaler. Dans les exemples des figures 3, 4 et 7, le dispositif de connexion 100, 200 comporte deux zones d'auto-connexion 104, 105, une première zone d'auto-connexion 104 dédiée à la première pièce 10, et une seconde zone d'auto-connexion 105 dédiée au conducteur électrique 3. Ces deux zones d'auto-connexion 104, 105 sont séparées, distantes et disposées de part et d'autre de la zone de montage 102. Dans l'exemple de la figure 8, le dispositif de connexion 300 comporte en outre une troisième zone d'auto-connexion 301, dédiée également à la première pièce 10, mais superposée à la seconde zone d'auto-connexion 105. Comme évoqué précédemment, les moyens de retenue 103 peuvent également former des zones d'auto-connexion dédiés à la première pièce 10 qui remplacent ou complètent la première zone d'auto-connexion 104, ou dédiés à la seconde pièce 20 lorsqu'elle est individuelle et électriquement conductrice. Dans des variantes non représentées, ces différentes zones d'auto-connexion 103, 104, 105, 301 peuvent être combinées entre-elles. En outre, elles ne sont pas nécessairement disposées en opposition, et peuvent être disposées à angle droit et/ou à des niveaux différents, ou encore confondues ou superposées.

La première zone d'auto-connexion 104 comporte, dans les exemples représentés, une denture 106, formée par découpage et pliage dans une des parties d'extrémité 102b de la lame 101. Elle est constituée d'une succession de dents, par exemple trois dents, sans que ce nombre ne soit limitatif. Les dents formant la denture 106 sont de préférence pointues, alignées dans un même plan parallèle au plan d'assemblage PA, orientées en dehors de la zone de montage 102 pour être saillantes du plan d'assemblage PA sur une hauteur H1 (fig. 5). Ainsi, la denture 106 est agencée pour interférer avec la première pièce 10 et s'incruster dans la matière de cette première pièce 10 lorsque l'équipement électrique 1 est monté sur la structure de support 2, et pressé contre elle par des moyens de serrage (non représentés), créant automatiquement un contact électrique entre ladite première pièce 10 et ledit dispositif de connexion 100, 100' (fig. 6). Ce contact électrique peut s'étendre en tout ou partie à la seconde pièce 20 si elle est au moins en partie électriquement conductrice. La première zone de connexion 104 étant constituée d'une partie pliée de la lame 101 forme ainsi une languette élastique, qui a l'avantage d'assurer le contact électrique avec l'équipement électrique 1, et ce même si la pression de serrage varie du fait soit de la dilatation des matériaux sous l'effet de contraintes extérieures, soit d'un desserrage des moyens de serrage de l'équipement électrique 1.

La seconde zone d'auto-connexion 105 comporte, dans les exemples représentés, un logement 107, 207 pour recevoir un tronçon d'un conducteur électrique 3, et un organe de poinçonnage 108 disposé au droit du logement 107, 207. Le logement 107, 207 est traversant pour permettre au conducteur électrique 3 de courir le long des équipements électriques 1 de manière continue ou discontinue. L'organe de poinçonnage 108 est agencé pour créer un contact électrique avec le conducteur électrique 3 lorsque l'équipement électrique 1 est monté sur la structure de support 2 et pressé contre elle par des moyens de serrage, connus en soi, non représentés et faisant partie du système de fixation desdits équipements sur ladite structure. Ces moyens de serrage sont par exemple des tiges filetées vissées dans des écrous captifs ou similaires prévus au niveau des étriers de fixation et serrées par une clé dynamométrique jusqu'à atteindre un couple de serrage d'environ 6N/m, selon les normes en vigueur, mais sans que cette valeur ne soit limitative. Le logement 107, 207 est disposé à proximité du plan d'assemblage PA de la lame 101. Dans les exemples représentés, la largeur du logement 107, 207 correspond sensiblement au diamètre du conducteur électrique 3. De même, la profondeur du logement 107, 207 depuis le plan d'assemblage PA correspond sensiblement au diamètre du conducteur électrique 3. Cette géométrie permet de recevoir complètement le conducteur électrique 3 à l'intérieur dudit logement 107, 207 sans qu'il soit comprimé, ni par le logement, ni par l'équipement électrique 1 lorsqu'il est monté sur la structure de support 2 et pressé contre elle par lesdits moyens de serrage (non représentés). Le logement 107 est intégré au dispositif de connexion et peut être formé par découpage et cintrage dans la partie d'extrémité 102c de la lame 101 située à l'opposé de la première zone d'auto-connexion 104, pour créer une gouttière en forme de C selon la variante de réalisation illustrée dans les figures 4 et 5. Le logement 207 peut aussi être formé par découpage et pliage dans la partie d'extrémité 102c de la lame 101, pour créer une arête d'appui en forme de C selon la variante de réalisation illustrée dans la figure 7. Ces exemples ne sont pas limitatifs et s'étendent à toute autre forme de réalisation permettant de remplir la fonction qui consiste à créer une zone de réception et de maintien d'un tronçon d'un conducteur électrique 3 pour pouvoir réaliser un contact électrique et donc une liaison équipotentielle entre ledit dispositif de connexion 100, 200, 300 et ledit conducteur électrique 3. Le logement 107, 207 pourrait en outre comporter une arête coupante (non représentée) pour sectionner au moins en partie la gaine isolante 30 du conducteur électrique 3 s'il en est pourvue. Il pourrait aussi être rapporté et fixé au dispositif de connexion par tout moyen approprié.

L'organe de poinçonnage 108 est intégré au dispositif de connexion et formé par une languette 109 en L découpée dans la zone de la partie médiane plane 102a de la lame 101 qui débouche dans le logement 107, 207. Cette languette 109 est liée à l'une de ses extrémités à la lame 101 par un pli 110 formant articulation. Bien entendu, cette forme de réalisation n'est pas limitative et s'étend à toute autre forme permettant de remplir les mêmes fonctions. Elle pourrait par exemple être rapportée sur le dispositif de fixation et fixée à la partie médiane plane 102a par une charnière ou un axe pivot.

La languette 109 est pourvue à l'autre extrémité d'un poinçon 111, formé d'une et par exemple de deux dents pointues, sans que le nombre de dents ne soit limitatif. La ou les dents formant le poinçon 111 peuvent être lisses et/ou crantées sur tout ou partie de leur longueur à la manière de crans sapin pour former un harpon. Elles sont notamment agencées pour perforer la gaine isolante 30, si le conducteur électrique 3 en est pourvu, et pénétrer dans le câble 31 du conducteur électrique 3 pour créer ledit contact électrique et simultanément le maintenir en position dans ledit logement 107, 207. Si les dents du poinçon 111 sont pourvues de crans formant un harpon, elles ont en outre l'avantage d'assurer le contact électrique avec le câble 31 du conducteur électrique 3, et ce même si la pression de serrage varie du fait soit de la dilatation des matériaux sous l'effet de contraintes extérieures, soit d'un desserrage des moyens de serrage de l'équipement électrique 1.

Cet organe de poinçonnage 108 est orienté pour être saillant du plan d'assemblage PA sur une hauteur H2 (fig. 5), lorsqu'il est en position repos ou passive, dans laquelle il n'est pas sollicité ni contraint et dans laquelle il ouvre le logement 107, 207. L'ouverture du logement 107, 207 doit être sensiblement égale au diamètre dudit conducteur électrique 3 pour pouvoir le rentrer sans effort ni compression. En outre, l'organe de poinçonnage 108 est mobile de cette position passive à une position active, dans laquelle il est sollicité et contraint en direction dudit logement 107, 207 pour le fermer et simultanément pénétrer au moins en partie dans ledit conducteur électrique 3, par le poids de l'équipement électrique 1 lorsqu'il est monté sur la structure de support 2 (fig. 6). Le passage de la position passive (fig. 5) à la position active (fig. 6) de l'organe de poinçonnage 108 s'effectue par pivotement de la languette 109 autour du pli 110 dans le sens de la flèche de pivotement R, lequel est obtenu par les forces d'appui selon les flèches F exercées par la première pièce 10 en direction de la seconde pièce 20 lors de la mise en place de l'équipement électrique 1 sur la structure portante 2 (voir figure 5) par lesdits moyens de serrage (non représentés). Le pivotement de l'organe de poinçonnage 108 en position active crée automatiquement un contact électrique entre ladite première pièce 10, le cas échéant avec ladite seconde pièce 20 si elle est électriquement conductrice, et ledit conducteur électrique 3 via ledit dispositif de connexion 100, 200, 300.

Dans les figures 3, 4 et 7, le dispositif de connexion 100, 200 qui est illustré est doublé, c'est-à-dire qu'il comporte deux paires d'une première zone d'auto-connexion 104 et d'une seconde zone d'auto-connexion 105. Les deux paires sont distantes l'une de l'autre, disposées en parallèle et agencées pour raccorder à la terre automatiquement et simultanément deux équipements électriques 1 disposés côte à côte, comme dans l'exemple illustré à la figure 1. Cette configuration, bien que pratique car elle permet de réduire de moitié le nombre de dispositifs de connexion 100, 200, n'est pas limitative. En effet, le dispositif de connexion 100, 200 pourrait ne comporter qu'une paire seule d'une première zone d'auto-connexion 104 et d'une seconde zone d'auto-connexion 105.

Dans la figure 8, le dispositif de connexion 300 illustre un exemple de réalisation qui ne comporte qu'une seule paire d'une première zone d'auto-connexion 104 et d'une seconde zone d'auto-connexion 105. En outre, il comporte une troisième zone d'auto-connexion 301 superposée à la seconde zone d'auto-connexion 105. Plus particulièrement, cette troisième zone d'auto-connexion 301 est formée par découpage et pliage d'une dent 302 pointue dans la languette 109 de l'organe de poinçonnage 108. La dent 302 est orientée en dehors de la zone de montage 102 pour être saillante du plan d'assemblage PA. Cet exemple de réalisation n'est pas limitatif, étant donné que cette troisième zone d'auto-connexion 301 peut être disposée quel que soit l'endroit dans la partie médiane plane 102a de la lame 101 qui correspond audit plan d'assemblage PA. En outre, elle pourrait remplacer la première zone d'auto-connexion 104, qui serait donc supprimée.

La mise en oeuvre du dispositif de connexion 100, 200, 300 selon l'invention s'effectue naturellement, sans contrainte, ni outillage, ni autre organe de fixation. En référence au mode d'installation illustré dans les figures 1, 5 et 6, chaque dispositif de connexion 100, 200, 300 est emboité sur une seconde pièce 20 appartenant à la structure de support 2 en fonction du ou des équipements électriques 1 à monter et à mettre au même potentiel, étant précisé que ce montage n'est pas exclusif et qu'il pourrait être monté sur la première pièce 10. Dans ce cas, sa géométrie sera adaptée à celle de ladite première pièce 10. Le conducteur électrique 3 est déposé très simplement dans le logement 107, 207 ouvert de chaque dispositif de connexion 100, 200, 300 pour les relier en parallèle. Selon l'installation, plusieurs conducteurs électriques 3 peuvent être prévus en parallèle. La mise en place et la fixation du ou des équipements électriques 1 sur la structure de support 2 via leurs propres moyens de serrage (non représentés) créent automatiquement une liaison équipotentielle entre les différents éléments conducteurs d'électricité permettant de garantir l'absence de potentiel électrique dans l'installation. En effet, la force de serrage exercée par lesdits moyens de serrage sur le dispositif de connexion 100, 200, 300 intercalé entre l'équipement électrique 1 et la structure de support 2 a pour fonction d'écraser simultanément toutes les zones d'auto-connexion 104, 105, 301 saillantes du plan d'assemblage PA, de rabattre l'organe de poinçonnage 108 en position active, d'incruster les dents et dentures 106, 302 dans la matière au moins de ladite première pièce 10, et de créer automatiquement un contact électrique entre la première pièce 10 appartenant audit équipement électrique 1, le cas échéant la seconde pièce 20 appartenant à ladite structure de support 2, le dispositif de connexion 100, 200, 300 et le conducteur électrique 3 relié à la terre ou à un potentiel de référence.

Le matériau du dispositif de connexion 100, 200, 300 assure une continuité électrique stable dans le temps, sans dégradation des autres matières mises en oeuvre. Contrairement à la solution classique de câblage, le dispositif de connexion 100, 200, 300 selon l'invention n'utilise pas de vis et de rondelles, ni d'organe de fixation additionnel, et n'est pas soumis au desserrage dû aux variations de température, ni aux vibrations. Il est ainsi fiable dans le temps, et ce quelles que soient les conditions climatiques et environnementales.

La présente invention n'est bien entendu pas limitée aux exemples de réalisation décrits mais s'étend à toute modification et variante évidentes pour un homme du métier dans la limite des revendications annexées.

## Revendications

1. Dispositif de connexion (100, 200, 300) pour mettre à la terre un équipement électrique (1) et/ou créer une liaison équipotentielle entre des éléments conducteurs, agencé pour être intercalé entre une première pièce (10) et une seconde pièce (20), ladite première pièce (10) appartenant audit équipement électrique (1) et étant électriquement conductrice, et ladite seconde pièce (20) appartenant à une structure de support (2) sur laquelle est monté ledit équipement électrique (1) et pouvant être au moins en partie électriquement isolante, dispositif de connexion comportant une première zone d'auto-connexion (103, 104, 301) agencée pour créer automatiquement un contact électrique entre ledit dispositif de connexion et ladite première pièce (10) lorsque ledit équipement électrique (1) est monté sur ladite structure de support (2), **caractérisé en ce que** ledit dispositif de connexion comporte en outre une seconde zone d'auto-connexion (105) agencée pour créer automatiquement un contact électrique entre ledit dispositif de connexion et un conducteur électrique (3) lorsque ledit équipement électrique (1) est monté sur ladite structure de support (2), de sorte qu'une liaison équipotentielle est créée automatiquement entre au moins ledit équipement électrique (1) et ledit conducteur électrique (3) lors de son montage sur ladite structure de support (2) via ledit dispositif de connexion (100, 200, 300) et ledit conducteur électrique (3) relié à la terre ou à un potentiel de référence, et **en ce que** ladite seconde zone d'auto-connexion (105) comporte un logement (107, 207) agencé pour recevoir un tronçon dudit conducteur électrique (3), et un organe de poinçonnage (108) disposé au droit dudit logement et agencé pour s'incruster au moins en partie dans ledit conducteur électrique (3), pour créer un contact électrique avec ledit conducteur électrique (3), et simultanément pour le maintenir en position dans ledit logement (107, 207), lorsque ledit équipement électrique (1) est monté sur ladite structure de support (2), ceci sans outillage, ni vis, ni autre organe de fixation additionnel.

2. Dispositif de connexion selon la revendication 1, **caractérisé en ce qu'**il comporte une lame (101) électriquement conductrice, et **en ce que** ladite première zone d'auto-connexion (103, 104, 301) et ladite seconde zone d'auto-connexion (105) sont formées dans ladite lame (101) par découpage et pliage.

3. Dispositif de connexion selon la revendication 1, **caractérisé en ce que** ladite lame (101) est réalisée en acier ressort.

4. Dispositif de connexion selon la revendication 1, **caractérisé en ce qu'**il comporte une zone de montage (102) agencée pour assembler par emboitement ledit dispositif de connexion (100, 200, 300) à l'une desdites première et seconde pièces (10, 20), ladite zone de montage (102) comportant un plan d'assemblage (PA) agencé pour s'intercaler entre lesdites première et seconde pièces (10, 20).

5. Dispositif de connexion selon la revendication 4, **caractérisé en ce que** ladite zone de montage (102) présente une section en forme de U réalisée par pliage de ladite lame (101), et comporte une partie médiane (102a) formant ledit plan d'assemblage (PA).

6. Dispositif de connexion selon la revendication 4, **caractérisé en ce que** ladite première zone d'auto-connexion (103, 104, 301) comporte une denture (106, 302) pointue et saillante dudit plan d'assemblage (PA), agencée pour s'incruster dans la matière de ladite première pièce (10) lorsque ledit équipement électrique (1) est monté sur ladite structure de support (2).

7. Dispositif de connexion selon la revendication 6, **caractérisé en ce que** la denture (106) de ladite première zone d'auto-connexion (103, 104) est formée par découpage et pliage dans une partie pliée de ladite lame (101).

8. Dispositif de connexion selon l'une quelconque des revendications précédentes, **caractérisé en ce que** ledit organe de poinçonnage (108) est saillant dudit plan d'assemblage (PA) et mobile entre une position passive dans laquelle il ouvre ledit logement (107, 207) pour pouvoir introduire ledit conducteur électrique (3) lorsque ledit équipement électrique (1) n'est pas monté sur ladite structure de support (2), et une position active dans laquelle il ferme ledit logement (107, 207) et s'incruste dans ledit conducteur électrique (3) lorsque ledit équipement électrique (1) est monté sur ladite structure de support (2).

9. Dispositif de connexion selon l'une quelconque des revendications précédentes, **caractérisé en ce que** ledit logement (107, 207) est traversant et formé par découpage et pliage, ou cintrage dans une partie pliée de ladite lame (101), et **en ce que** ledit organe de poinçonnage (108) est formé par une languette (109) en L découpée dans une partie droite ladite lame (101), liée à l'une de ses extrémités à ladite lame (101) par un pli (110) formant articulation et pourvue à l'autre extrémité d'au moins une dent pointue et/ou crantée formant poinçon (111).

10. Dispositif de connexion selon l'une quelconque des revendications précédentes, **caractérisé en ce qu'**il comporte en outre des moyens de retenue (103) agencés pour s'incruster dans la matière de la pièce à laquelle il est assemblé desdites première et seconde pièces (10, 20) et empêcher son retrait, et simultanément créer un contact électrique avec ladite pièce à laquelle il est assemblé si elle est électriquement conductrice.

11. Dispositif de connexion selon la revendication 10, **caractérisé en ce que** lesdits moyens de retenue (103) sont formés par des dents pointues, obtenues par découpage et pliage dans des parties pliées de ladite lame (101), disposées en opposition et saillantes à l'intérieur de ladite zone de montage (102).

12. Dispositif de connexion selon la revendication 10, **caractérisé en ce que** lesdits moyens de retenue (103) forment une zone d'auto-connexion qui complète ou remplace ladite première zone d'auto-connexion (104) si la pièce à laquelle il est assemblé correspond à ladite première pièce (10).

13. Dispositif de connexion selon l'une quelconque des revendications précédentes, **caractérisé en ce qu'**il comporte une troisième zone d'auto-connexion (301) qui complète ou remplace ladite première zone d'auto-connexion (104), comportant au moins une dent pointue et saillante dudit plan d'assemblage (PA).

14. Dispositif de connexion selon la revendication 13, **caractérisé en ce que** ladite troisième zone d'auto-connexion (301) est superposée audit organe de poinçonnage (108).

15. Dispositif de connexion selon l'une quelconque des revendications précédentes, **caractérisé en ce qu'**il comporte deux paires d'une première zone d'auto-connexion (103, 104, 301) et d'une seconde zone d'auto-connexion (105), les deux paires étant distantes l'une de l'autre, disposées en parallèle et agencées pour raccorder automatiquement à la terre ou à un potentiel de référence deux équipements électriques (1) disposés côte à côte et montés sur une structure de support (2).

## Patentansprüche

1. Verbindungsvorrichtung (100, 200, 300) zum Erden eines elektrischen Geräts (1) und/oder zur Herstellung einer Äquipotentialverbindung zwischen leitenden Elementen, dazu vorgesehen, zwischen einem ersten Teil (10) und einem zweiten Teil (20) eingesetzt zu werden, das erste Teil (10) gehört dabei zu dem erwähnten elektrischen Gerät (1) und ist elektrisch leitend und das zweite Teil (20) gehört zu einer Haltestruktur (2), auf der dieses elektrische Gerät (1) montiert ist und das zumindest zum Teil elektrisch isoliert sein kann, Verbindungsvorrichtung, die eine erste Selbstverbindungszone (103, 104, 301) enthält, vorgesehen um automatisch einen elektrischen Kontakt zwischen dieser Verbindungsvorrichtung und diesem ersten Teil (10) herzustellen, wenn das erwähnte elektrische Gerät (1) auf diese Haltestruktur (2) montiert wird, **dadurch gekennzeichnet, dass** diese Verbindungsvorrichtung außerdem eine zweite Selbstverbindungszone (105) enthält, vorgesehen um automatisch einen elektrischen Kontakt zwischen dieser Verbindungsvorrichtung und einem elektrischen Leiter (3) herzustellen, wenn dieses elektrische Gerät (1) auf dieser Haltestruktur (2) montiert ist, so dass automatisch eine Äquipotentialverbindung zwischen mindestens diesem elektrischen Gerät (1) und diesem elektrischen Leiter (3) bei seiner Montage an dieser Haltestruktur (2) über die erwähnte Verbindungsvorrichtung (100, 200, 300) und dem erwähnten elektrischen Leiter (3), geerdet oder mit einem Referenzpotential verbunden, hergestellt wird und dadurch, dass diese zweite Selbstverbindungszone (105) eine Aufnahme (107, 207) enthält, ausgelegt zur Aufnahme eines Abschnitts dieses elektrischen Leiters (3), sowie ein Stanzelement (108), angeordnet geradlinig zu dieser Aufnahme und dazu ausgelegt, sich zumindest teilweise in diesen elektrischen Leiter (3), zu krallen, um einen elektrischen Kontakt zu diesem elektrischen Leiter (3) herzustellen und ihn gleichzeitig in dieser Aufnahme (107, 207) in Position zu halten, wenn dieses elektrische Gerät (1) auf dieser Haltestruktur (2) montierte ist, alles ohne Werkzeuge, oder Schrauben oder sonstige zusätzliche Befestigungselemente.

2. Verbindungsvorrichtung nach Anspruch 1, **dadurch gekennzeichnet, dass** sie einen elektrisch leitenden Streifen (101) enthält und dass die erwähnte erste Selbstverbindungszone (103, 104, 301) und die erwähnte zweite Selbstverbindungszone (105) in diesem Streifen (101) durch Schneiden und Falten hergestellt wird.

3. Verbindungsvorrichtung nach Anspruch 1, **dadurch gekennzeichnet, dass** dieser Streifen (101) aus Federstahl ausgeführt wird.

4. Verbindungsvorrichtung nach Anspruch 1, **dadurch gekennzeichnet, dass** sie eine Montagezone (102) enthält, vorgesehen zum Zusammenbau durch Einstecken dieser Verbindungsvorrichtung (100, 200, 300) in eines der ersten und zweiten Teile (10, 20), diese Montagezone (102) enthält dabei eine Zusammenbauebene (PA), vorgesehen um zwischen diese ersten und zweiten Teile (10, 20) eingesetzt zu werden.

5. Verbindungsvorrichtung nach Anspruch 4, **dadurch gekennzeichnet, dass** diese Montagezone (102) einen U-förmigen Querschnitt aufweist, erzielt durch Falten dieses Streifens (101), und einen mittleren Teil (102a) enthält, der diese Zusammenbauebene (PA) bildet.

6. Verbindungsvorrichtung nach Anspruch 4, **dadurch gekennzeichnet, dass** die erwähnte Selbstverbindungszone (103, 104, 301) eine spitze, aus dieser Zusammenbauebene (PA) herausragende Verzahnung (106, 302) enthält, dazu vorgesehen, sich in das Materials dieses ersten Teils (10) zu krallen, wenn dieses elektrische Gerät (1) auf dieser Haltestruktur (2) montiert ist.

7. Verbindungsvorrichtung nach Anspruch 6, **dadurch gekennzeichnet, dass** die Verzahnung (106) dieser ersten Selbstverbindungszone (103, 104) durch Schneiden und Falten in einem gefalteten Teil dieses Streifens (101) gebildet wird.

8. Verbindungsvorrichtung, nach irgendeinem der vorstehenden Ansprüche, **dadurch gekennzeichnet, dass** das erwähnte Stanzelement (108) aus dieser Zusammenbauebene (PA) herausragt und beweglich ist zwischen einer passiven Position, bei der es die erwähnte Aufnahme (107, 207) öffnet, um den erwähnten elektrischen Leiter (3) einführen zu können, wenn dieses elektrische Gerät (1) nicht auf dieser Haltestruktur (2) montiert ist und einer aktiven Position, bei der es diese Aufnahme (107, 207) schließt und sich in diesen elektrischen Leiter (3) krallt, wenn dieses elektrische Gerät (1) auf dieser Haltestruktur (2) montiert ist.

9. Verbindungsvorrichtung nach irgendeinem der vorstehenden Ansprüche, **dadurch gekennzeichnet, dass** diese Aufnahme (107, 207) durchführend ist und durch Schneiden und Falten oder Biegen in einem gefalteten Teil dieses Streifens (101) geformt wird und dadurch, dass dieses Stanzelement (108) von einer L-förmigen Lasche (109) gebildet wird, die in einem rechten Teil dieses Streifens (101) ausgeschnitten wird, verbunden an einem seiner Enden mit diesem Streifen (101) über eine Falte (110), die ein Gelenk bildet und am anderen Ende versehen mit einem spitzen und/oder gekrümmten Zahn, der eine Stanze (111) bildet.

10. Verbindungsvorrichtung nach irgendeinem der vorstehenden Ansprüche, **dadurch gekennzeichnet, dass** sie außerdem Haltelemente (103) enthält, vorgesehen sich in das Material des Teils zu krallen, mit dem diese ersten und zweiten Teile (10, 20) zusammengebaut werden sollen und die Wegnahme zu verhindern und gleichzeitig einen elektrischen Kontakt zu diesem Teil, mit dem sie zusammengebaut wird, herzustellen, wenn dieses elektrisch leitend ist.

11. Verbindungsvorrichtung nach Anspruch 10, **dadurch gekennzeichnet, dass** diese Halteelemente (103) aus spitzen Zähnen bestehen, die durch Schneiden und Falten in den gefalteten Teilen dieses Streifens (101) erhalten werden, angeordnet gegenüberliegend und ins Innere dieser Montagezone (102) reichend.

12. Verbindungsvorrichtung nach Anspruch 10, **dadurch gekennzeichnet, dass** die erwähnten Haltelemente (103) eine Selbstverbindungszone bilden, die diese erste Selbstverbindungszone (104) ergänzt oder ersetzt, wenn das Teil mit dem sie zusammengebaut wird, diesem erstem Teil (10) entspricht.

13. Verbindungsvorrichtung nach irgendeinem der vorstehenden Ansprüche, **dadurch gekennzeichnet, dass** sie eine dritte Selbstverbindungszone (301) enthält, die diese erwähnte Selbstverbindungszone (104) ergänzt oder ersetzt, die mindestens einen spitzen und aus dieser Zusammenbauebene (PA) herausragenden Zahn enthält.

14. Verbindungsvorrichtung nach Anspruch 13, **dadurch gekennzeichnet, dass** diese dritte Selbstverbindungszone (301) über das erwähnte Stanzelement (108) gelegt ist.

15. Verbindungsvorrichtung nach irgendeinem der vorstehenden Ansprüche, **dadurch gekennzeichnet, dass** sie zwei Paare einer ersten Selbstverbindungszone (103, 104, 301) und einer zweiten Selbstverbindungszone (105) enthält, die beiden Paare haben dabei Abstand voneinander, sind parallel angeordnet und dazu vorgesehen, sich automatisch mit der Erde oder einem Referenzpotential zu verbinden zwei elektrische Geräte (1) sind nebeneinander angeordnet und auf einer Haltestruktur (2) montiert.

## Claims

1. A connection device (100, 200, 300) for earthing an electrical apparatus (1) and/or creating an equipotential link between two conductive elements, arranged to be inserted between a first part (10) and a second part (20), said first part (10) belonging to said electrical apparatus (1) and being electrically conductive, and said second part (20) belonging to a support structure (2) on which said electrical apparatus (1) is mounted and which may be at least partly electrically insulating, said connection device comprising a first automatic connection area (103, 104, 301) arranged to automatically create electrical contact between said connection device and said first part (10) when said electrical apparatus (1) is mounted on said support structure (2), **characterized in that** said connection device further comprises a second automatic connection area (105) arranged to automatically create electrical contact between said connection device and an electrical conductor (3) when said electrical apparatus (1) is mounted on said support structure (2), such that an equipotential link is automatically created between at least said electrical apparatus (1) and said electrical conductor (3) when being mounted on said support structure (2) via said connection device (100, 200, 300) and said electrical conductor (3), earthed or connected to a reference potential, and **in that** said second automatic connection area (105) comprises a housing (107, 207) arranged to receive a segment of said electrical conductor (3), and a punching member (108) arranged in line with said housing and arranged to be embedded at least partially in said electrical conductor (3), to create an electrical contact with said electrical conductor (3), and simultaneously to keep it in position in said housing (107, 207), when said electrical apparatus (1) is mounted on said support structure (2), i.e., without any tools, screws or other additional fastening members.

2. The connection device according to claim 1, **characterized in that** it comprises an electrically conductive blade (101), and **in that** said first automatic connection area (103, 104, 301) and said second automatic connection area (105) are formed in said blade (101) by cutting and bending.

3. The connection device according to claim 1, **characterized in that** said blade (101) is made from spring steel.

4. The connection device according to claim 1, **characterized in that** it comprises a mounting area (102) arranged to assemble said connection device (100, 200, 300) to one of said first and second parts (10, 20) by fitting, said mounting area (102) comprising an assembly plane (PA) arranged to be inserted between said first and second parts (10, 20).

5. The connection device according to claim 4, **characterized in that** said mounting area (102) has a U-shaped section made by bending said blade (101), and comprises a median portion (102a) forming said assembly plane (PA).

6. The connection device according to claim 4, **characterized in that** said first automatic connection area (103, 104, 301) comprises a pointed toothing (106, 302) projecting from said assembly plane (PA), arranged to become embedded in the material of said first part (10) when said electrical apparatus (1) is mounted on said support structure (2).

7. The connection device according to claim 6, **characterized in that** the toothing (106) of said first automatic connection area (103, 104) is formed by cutting and bending in a bent portion of said blade (101).

8. The connection device according to any of the preceding claims, **characterized in that** said punching member (108) projects from said assembly plane (PA) and is movable between a passive position, in which it opens said housing (107, 207) to be able to introduce said electrical conductor (3) when said electrical apparatus (1) is not mounted on said support structure (2), and an active position, in which it closes said housing (107, 207) and is embedded in said electrical conductor (3) when said electrical apparatus (1) is mounted on said support structure (2).

9. The connection device according to any of the preceding claims, **characterized in that** said housing (107, 207) is a through housing and is formed by cutting and bending, or cambering in a bent portion of said blade (101), and **in that** said punching member (108) is formed by an L-shaped tab (109) cut into a straight part of said blade (101), connected at one of its ends to said blade (101) by a bend (110) forming an articulation and provided at the other end with at least one pointed and/or notched tooth forming a punch (111).

10. The connection device according to any of the preceding claims, **characterized in that** it further comprises retaining means (103) arranged to become embedded in the material of the part with which it is assembled from said first and second parts (10, 20) and to prevent its removal, and simultaneously create electrical contact with said part with which it is assembled if it is electrically conductive.

11. The connection device according to claim 10, **characterized in that** said retaining means (103) are formed by pointed teeth obtained by cutting and bending in bent parts of said blade (101), which are arranged in opposition and projecting inside said mounting area (102).

12. The connection device according to claim 10, **characterized in that** said retaining means (103) form an automatic connection area which completes or replaces said first automatic connection area (104) if the part with which it is assembled corresponds to said first part (10).

13. The connection device according to any of the preceding claims, **characterized in that** it comprises a third automatic connection area (301) which completes or replaces said first automatic connection area (104), comprising at least one pointed tooth projecting from said assembly plane (PA).

14. The connection device according to claim 13, **characterized in that** said third automatic connection area (301) is superimposed on said punching member (108).

15. The connection device according to any of the preceding claims, **characterized in that** it comprises two pairs of a first automatic connection area (103, 104, 301) and a second automatic connection area (105), the two pairs being distant from one another, arranged in parallel and arranged to automatically connect to earth or to a reference potential two electrical apparatuses (1) which are arranged side by side and mounted on a support structure (2).
